# EUROPEAN PATENT APPLICATION

(11) **EP 1 589 423 A2**
(43) Date of publication of application: **26.10.2005**
(21) Application number: 04011696.4
(22) Date of filing: 17.05.2004
(51) Int. Cl.: G06F 9/50

(54) **Contents data processing device and method**

(30) Priority: 24.03.2004 JP 2004085958
(71) Applicant: Hitachi, Ltd., Chiyoda-ku, Tokyo 101-8010 (JP)
(72) Inventor: Morimoto, Yoshiaki Hitachi, Ltd., IPG., Chiyoda-ku, Tokyo 100-8220 (JP); Mizutani, Mika Hitachi, Ltd., IPG., Chiyoda-ku, Tokyo 100-8220 (JP); Le Moal, Damien Hitachi, Ltd., IPG., Chiyoda-ku, Tokyo 100-8220 (JP)
(74) Representative: Strehl Schübel-Hopf & Partner

(57) **Abstract**

It is difficult to implement an arrangement for handling of contents data such as moving picture and audio data because of a need to ensure the desired bit rate, etc. In ordinary cases, therefore, a configuration dependent on hardware results and the portability of the system is low. A layered contents processing architecture improves the portability of the system and facilitates the development of application programs (80). In a case where part of devices are combined into an LSI, the layered architecture can also be applied to the LSI.

## Description

### BACKGROUND

The present invention relates to software and hardware architectures for processing multimedia data.

In recent years, moving pictures, speech and the like have been put to various uses as multimedia data handled in computers. For example, apparatuses called hard disk recorders in which a moving picture in a television broadcast or the like is converted in real time by a moving picture CODEC to be recorded on a hard disk, players which display, on video displays, moving picture contents data recorded as digital data on optical disks including DVDs, etc., have come into widespread use. It is ordinarily required that processing of such contents be performed in a certain time period by reading contents data at a designated bit rate. For use of such contents data, it is important to enable a program module for executing such complicated stream processing to be easily developed. Systems therefore exist in which a program for performing contents processing is executed in the kernel of an operating system (OS) on which the desired performance can be easily ensured.

In ordinary OSs, programs executed in the kernel can be executed with priority over programs executed on user level. For this reason, a contents processing program which needs to be executed so that processing is completed in a certain time period is executed in the kernel. For example, according to an art disclosed in JP-A-10-283195, a plurality of data-processing device drivers each called a filter are connected to enable content processing. Each filter is a module specialized in correspondence with a device and a data format and having an interface for input/output and control. Data processing using the filters is performed in such a manner that data processed by a particular one of the filters is delivered to the other filters. This system is characterized in that filters operate on a kernel portion of an OS, the desired performance can therefore be ensured easily and a program can be formed by only connecting filters.

However, when a stream processing program is provided in the kernel of an OS, a configuration dependent on a particular execution environment, i.e., on the OS in particular, is formed.

On the other hand, an arrangement such as one disclosed in JP-A-8-279963 also exists in which a stream processing device in hardware form is formed in a layered configuration to improve portability. In this device, however, a separate piece of hardware is used for each of different kinds of processing and there is, therefore, a problem that the processor is increased in size and price.

### SUMMARY

As described above, almost all the conventional methods use, as implementation enabling handling of streams on drivers, implementation on an OS of a kernel portion on which the desired performance can be easily ensured. In such a case, the dependence on an OS and a hardware configuration (which configuration will be referred to as "platform") is high and it is difficult for a program for using contents to be adapted to different platforms.

Also, each platform has contents data processing means specific to it. Therefore, it is necessary to develop a program for using contents with respect to each of different OSs or hardware configurations, and an increase in the number of development steps results.

To solve the above-described problems, the present invention provides contents processing means adaptable to various platforms, and a contents processing architecture for the contents processing means.

In the present invention, processing of contents is realized on the basis of a combination of layers having functions necessary for contents processing.

According to the present invention, when a contents processing program on one platform is transferred to a different platform, it can operate without being substantially changed. The number of program development steps can therefore be reduced and a program for using contents data can be developed with improved facility.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram showing a software configuration in an embodiment of the present invention;
Fig. 2 is a diagram showing a hardware configuration to which the embodiment can be applied;
Fig. 3 is a configuration diagram in a case where an LSI is applied to the configuration shown in Fig. 2;
Fig. 4 is a diagram showing a software configuration corresponding to the configuration shown in Fig. 3;
Fig. 5 is a flowchart of the process of contents processing;
Fig. 6 is a flowchart of the process of contents processing in the system to which the LSI is applied;
Fig. 7 of a diagram showing a software configuration with an added software library;
Fig. 8 is a diagram showing a configuration in which a system interface section is implemented in an OS;
Fig. 9 is a diagram showing a configuration in which a contents processing section is implemented in an OS;
Fig. 10 is a diagram showing the construction of a resource management table;
Fig. 11 is a flowchart of processing for determining whether or not a resource can be used;
Fig. 12 is a flowchart in a case where basic processing is performed;
Fig. 13 is a diagram showing processing in a contents processing section;
Fig. 14 is a table showing data processing flows in contents processing;
Fig. 15 is a table of usable data access modules; and
Fig. 16 is a table of usable data processing modules.

### DESCRIPTION OF THE EMBODIMENTS

An embodiment of the present invention will be described. The system architecture is constituted by an OS including a driver section which provides an interface with hardware, a system interface section which is a layer provided as an interface in which functions varying from OS to OS (e.g., functions such as system call and a method of access to device drivers varying from platform to platform) are combined to provide common functions, a contents processing section which is located above the system interface section and which performs processings including processing of contents data and processing for obtaining data from a data source, a contents management section which provides data processing for contents to be handled, and an application program using functions provided by these layers.

In this structure, an interface for exchanging data and events between a pair of upper and lower layers in the above-described layers is prescribed. For example, the system interface section combines OS functions necessary for processing of contents, e.g., system calls for memory management, access to a disk and generation of a task into common functions and provides the common functions to the upper layers, thereby enabling the layers above the system interface section to be implemented independently of the platform. "Combing functions into common functions" refers to a process in which on the basis of an instruction from an upper program layer, the instruction is executed in a lower program layer by a processing procedure defined in advance.

The contents processing section performs processing of contents data by utilizing functions provided by the system interface section. Patterns of data processing in this contents processing are managed by the contents management section. The contents management section provides an interface with the application program. From the application program, one of the data processing patterns is designated via the interface to enable the contents processing section to construct a data path for contents processing. The data path for contents processing is a path which is formed by designating the functional modules necessary for processing contents to be processed and through which processed contents data flows. Thereafter, an instruction is issued from the application program via the contents management section to start and stop contents processing according to timing designated by a user, thus enabling control of processing.

Even on a different platform, the application program thus formed can be made executable by making a necessary minimum change therein, if a contents processing system in accordance with a contents processing architecture provided in the present invention is implemented.

The contents processing architecture can also be applied even in a case where a portion or the whole of the hardware is formed in an LSI. Also in such a case, the application program can be used without being substantially changed.

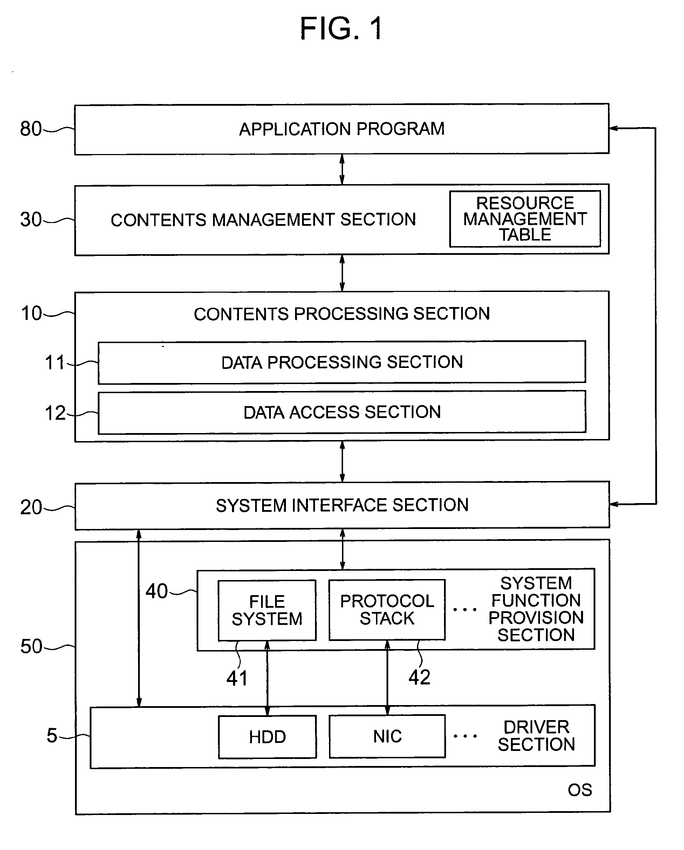

Fig. 1 shows the configuration of this embodiment. This embodiment has a layered structure such as shown in Fig. 1. This layered structure has, as its bottom to top layers, a driver section 50, a system function provision section 40, a system interface section 20, a contents processing section 10, a contents management section 30, and an application program 80. The driver section 50 is a layer for controlling device drivers for respectively accessing pieces of hardware existing in the platform, e.g., a hard disk unit, a CODEC processing unit and a network interface. The system function provision section 40 is a layer for providing functions from an OS 5, e.g., for providing a file system 41, a network protocol stack 42, etc. In ordinary OSs, the driver section and the system function provision sections are provided in the OS. If these layers do not exist in an OS, they may be newly added to enable use of the architecture of this embodiment. Also, the driver section 50 and the system function provision section 40 may be implemented as one layer. Contents data to be processed include stream data. Stream data is data which is sequentially accessed.

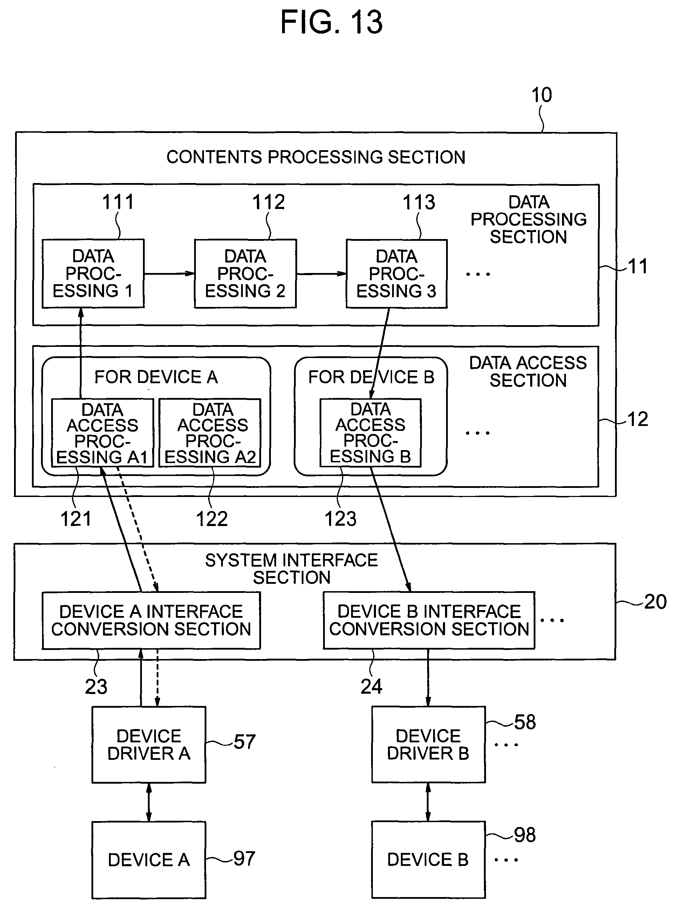

The system interface section 20 provides an interface in which functions provided by the OS 5 and device access functions for accessing devices through various device drivers (HDD driver, NIC driver, etc.) are combined into common functions to enable access to the devices by a method independent of the platform. That is, even if the platform is changed, the method of accessing a hard disk drive (HDD) device or a network is basically the same. For example, for file read, the functions of designating the name of a file to be read, a read mode, a read position and a read length are provided. The procedure for this designation and the interface for access vary from platform to platform. Therefore there is a need to change the program using these functions when the program is transferred to a different platform. Interfaces and procedures varying from platform to platform are absorbed in the system interface section 20 and a common interface and procedure are provided to the upper layers. Further, for example, in a case where data exchange is performed between a plurality of application programs 80, functions provided by the system interface section 20 may be used to form a program independent of the platform. The function provided by the system interface 20 is to combine functions provided by the platform into common functions. Data is changed in the data access section 12 in the contents processing section 10. Details of data change processing will be described with reference to Fig. 13.

The contents processing section 10 includes a data access section 12 which perform data exchange with the driver section 50 through the system interface section 20, and a data processing section 11 which processes data.

The data processing section 11 processes data received from the data access section 12 in accordance with a predetermined processing procedure and returns the processed data as its output to the data access section 12. For example, when an instruction to transfer data stored in a HDD to an external appliance connected to a network is provided from the application program, the data processing section 11 adds suitable headers to data read from the hard disk by the data access section 12, and the data is output to the network through the data access section 12. For example, in a case where data is transmitted on the basis of UDP (User Datagram Protocol), there is a possibility of packet loss or the transmission sequence and the arrival sequence differing from each other. A method of adding headers having a sequence of numbers to the data to enable detection of such an error is conceivable. Thus, "Suitable headers" are data added to contents data to enable the data to be correctly processed by a device or to be correctly transmitted. It is also conceivable that, with respect to input/output of a device other than the network, headers necessary for the device are added and deleted in the same manner. For example, checksum or the like for checking whether or not transfer is performed is conceivable. Contents data handled in the data access section 12 and the data processing section 11 are not output to the layers above the contents management section 30.

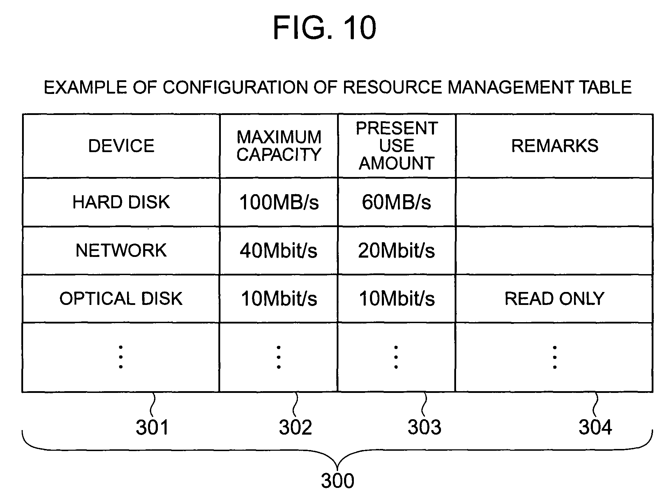

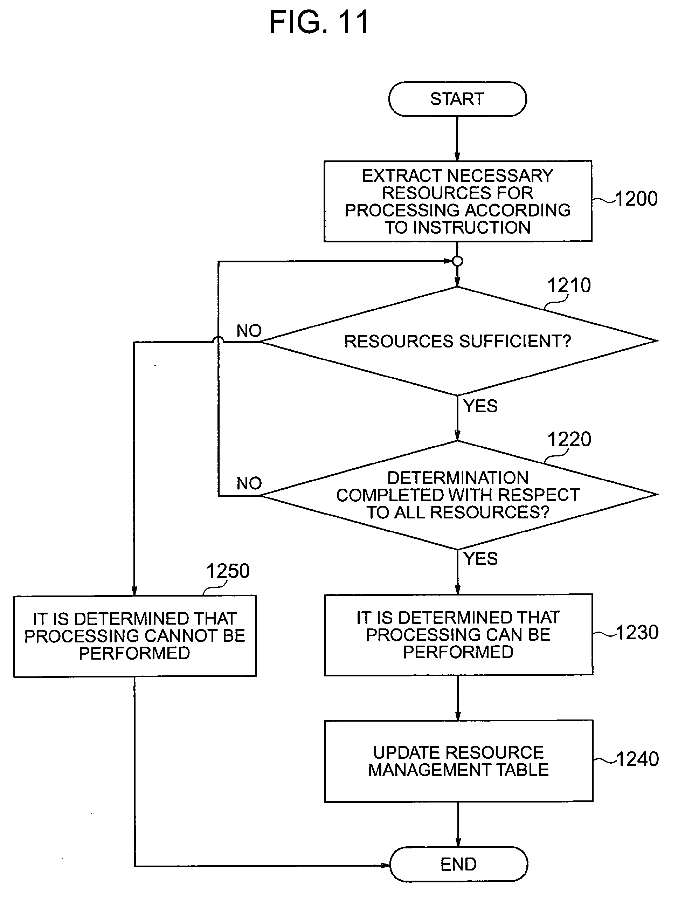

The contents management section 30 controls the contents processing section 10 by using a control interface provided in the contents processing section 10. The contents management section 30 also manages, on a resource management table 300, resources which can be handled by appliances to which this architecture is applied. "Resources" denote hardware resources necessary when contents processing is performed, e.g., a CPU, memories, usable devices and bandwidths usable by the devices. The resource management table will be described below in detail with reference to Figs. 10 and 11. In this embodiment, to facilitate execution of contents processing by the application program 80, the contents management section 30 determines whether or not processing according to an instruction is executable and thereafter requests the contents processing section 10 to perform processing. Functions provided by the contents management section 30 are, for example, the function of designating a file name of a file existing in a HDD and instructing the contents processing section 10 to transmit the contents of the file at a designated bit rate to a designated port number of a network appliance of a designated IP address, thereby ensuring that the application program 80 can transfer the desired data by designating a transfer-source appliance, the name of data to be processed and a transfer-destination appliance, even if has no information on a concrete method for access to the designated appliance, a method of handling data or the like. For example, in a case where data obtained from the hard disk is transferred to the network, there is a need to encrypt data output from the network. However, even if the application does not recognize which encryption processing will be performed and timing of encryption processing.

The function of providing a list of contents which can be handled by the platform to the application program 80 and refusing an instruction from the application program 80 for processing exceeding the performance of the hardware is also provided. Details of this function will be described below with reference to Figs. 10 and 11.

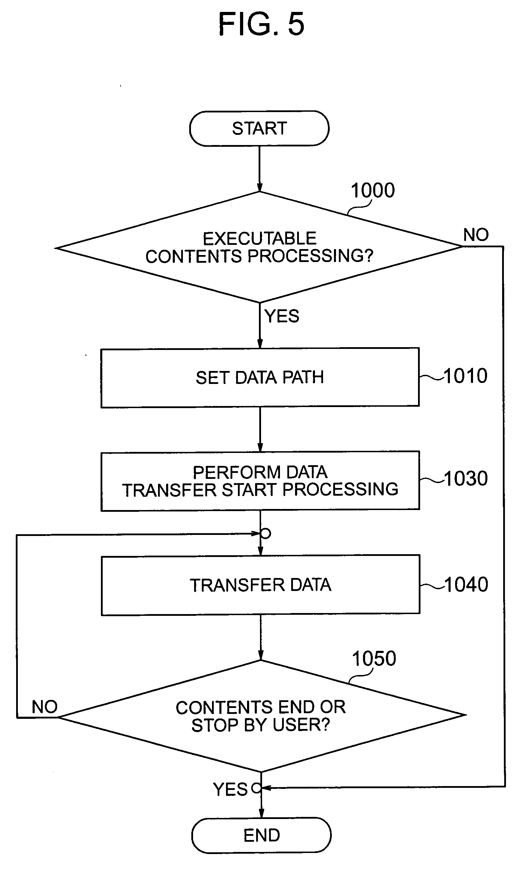

A process from the provision of an instruction from the application program 80 to make the contents processing section 10 perform contents processing to the completion of contents processing will be described with reference to Fig. 5.

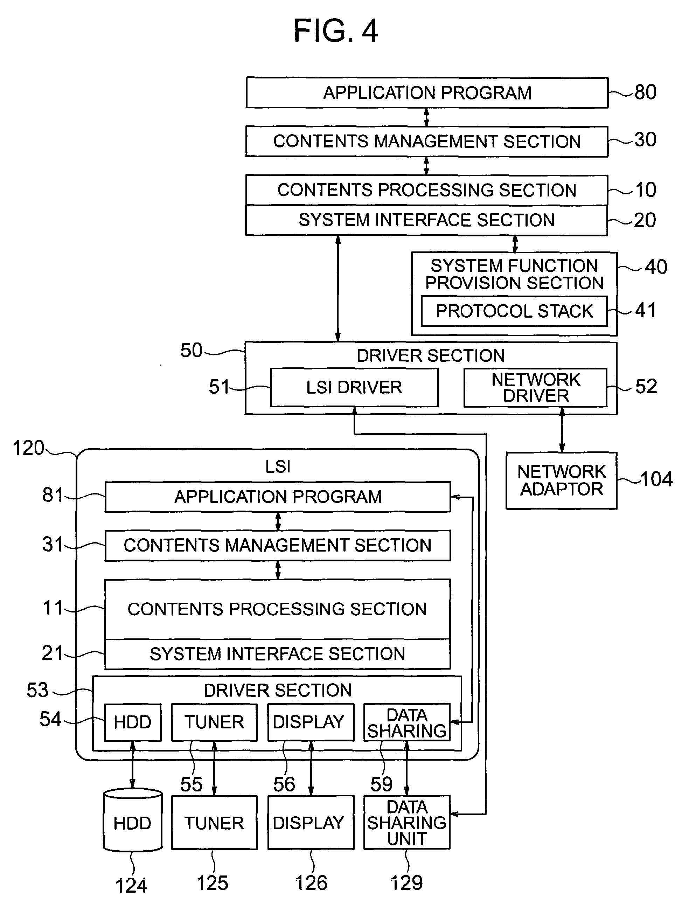

The contents management section 30 determines whether or not contents processing in accordance with the instruction is executable (step 1000). The method of this determination will be described with reference to Figs. 10 and 11. If contents data can be used, setting of a data path necessary for processing the contents data is made (step 1010). For example, in a case where copying from a hard disk is performed by using an optical disk device, a data path optimized as to how the data is caused to flow is determined from patterns and usable resources held in advance by the contents management section 30. Data transfer processing is subsequently performed (step 1030). The contents data is thereby transferred via the data path set in step 1010 (step 1040). This processing is continued until the entire contents data is transferred or until a user stops processing (step 1050). Description will be made of the above mentioned patterns with reference to Fig. 4.

For example, processing in a case where instruction is transmitted from the application program 80 to the contents management section 10 to send out data read out from a hard disk 103 to a network adaptor 104 is as described below. First, determination is made as to whether processing according to the instruction from the application program is executable. In this case, the hard disk and the network adaptor are provided and determination is made as to whether or not they are available (as described below in detail). If it is determined that they are available, a data path for causing contents to flow from the hard disk to the network adaptor is set. When the application program issues an instruction to start transfer, transfer of data through the data path is performed. Processing is continued until transmission of the contents file to the end of the contents file is completed or until the application program issues an instruction to stop processing. In this data transfer, the contents data is not delivered to the application program 80 and processing is performed in the contents processing section 10 and the data access section 11. Other operations for stop of contents data, pause, return, fast forward, reverse, etc., are also performed in the same manner.

A method of determining whether or not processing according to an instruction can be performed by using the resource management table 300 will be described with reference to the resource management table shown in Fig. 10 and the processing flow shown in Fig. 11. The resource management table 300 includes usable devices 301, the maximum capacities 302 of the devices, the present use amounts 303 and remarks 304. For example, when an instruction to perform transfer at a bit rate of 20 Mbps from the hard disk to the network adaptor is sent from the application program 80 in the case where the contents of the resource management table are described as shown in Fig. 10, the necessary resources are first extracted (step 1200). In this case, it is determined that the hard disk and the network are used as resources. Subsequently, determination is made as to whether or not there is no problem with addition of contents processing at 20 Mbps to the preset hard disk use amount 303 (step 1210). In this case, the maximum capacity 302, i.e., 100 Mbps, is not reached and it is therefore determined that the processing can be performed. Subsequently, similar determination is also made (step 1220). Since the maximum capacity 302 of the network, i.e., 40 Mbps, is not exceeded, it is determined that the processing can be performed (step 1230), the resource management table is updated (step 1240) and the process ends. When, for example, an instruction to write from the hard disk to the optical disk is provided, it is determined that processing cannot be performed (step 1250), since only write on the optical disk usable on this platform is supported.

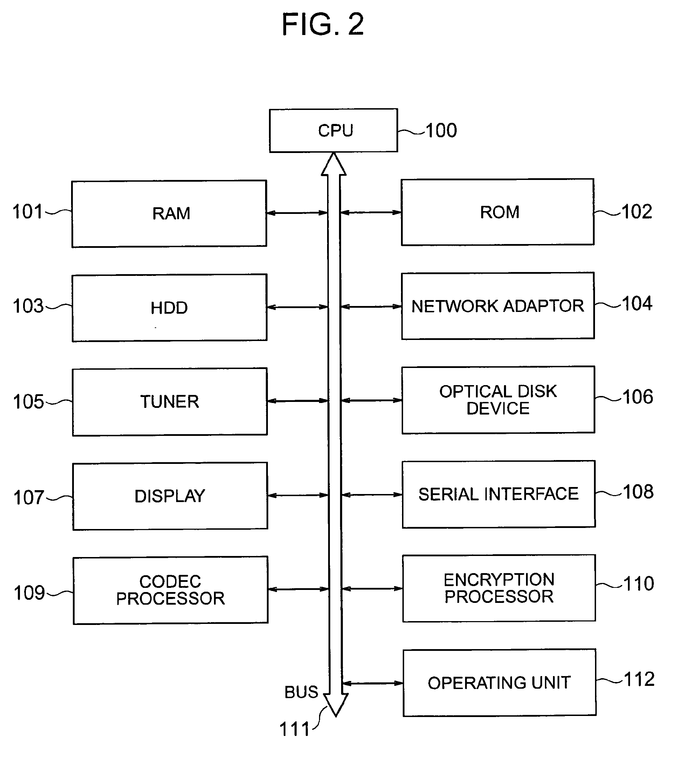

A hardware configuration capable of implementing this embodiment will next be described with reference to Fig. 2. In this embodiment, a CPU 100, a RAM 101, a ROM 102, a hard disk 103, a network adaptor 104, a tuner 105, an optical disk device 106, a display 107, a serial interface 108, a CODEC processor 109, an operating unit 112 and an encryption processor 110 are connected to a bus 111. This configuration is substantially the same as an ordinary computer or hard disk recorder configuration. The network adaptor 104 may be of a wired network type such as Ethernet (trademark) or a wireless network type. The tuner 105 is a device which receives ground waves or broadcast waves from a broadcasting satellite or a communication satellite and converts the received waves into data which can be handled by a computer. A plurality of tuners for various broadcastings may exist. The optical disk device 106 is a device for read and write on a recording medium such as a CD (compact disc), DVD (digital versatile disk), an AOD (advanced optical disc) or a blue-ray. As an example of the display 107, a cathode-ray tube, a liquid crystal display, a plasma display or an organic EL display is conceivable. The display may be connected through a display connection interface.

As an example of the serial interface 108, an interface such as RS-232C, USB (universal serial bus) or IEEE1394 for serial transfer of data is conceivable. The CODEC processor 109 is a means for performing processing for converting contents data into a particular moving picture format, e.g., MPEG2 or MPEG4 or obtaining video information and audio information from a particular moving picture format. The functions of this device can be provided by means of software. The decryption processor 110 performs processing for decrypting contents data if the contents data is provided in an encrypted state, and processing for encrypting contents data. The functions of this processor can also be provided by means of software. As an example of the bus 111, a general-purpose bus or a local bus specialized for the CPU or the peripheral chip is conceivable. As an example of the general-purpose bus, a PCI (Peripheral Components Interconnect) bus is conceivable. Use of different buses coupled by a bus bridge is also conceivable. The operating unit 112 is a means for enabling a user using a remote controller or a keyboard to control the devices. A plurality of devices or units may be provided as each of the devices and units constituting this embodiment as required. The devices other than the CPU, the RAM and the bus are implemented according to one's need. The application program and the software required in each layer are implemented by being loaded in the memory and executed by the CPU.

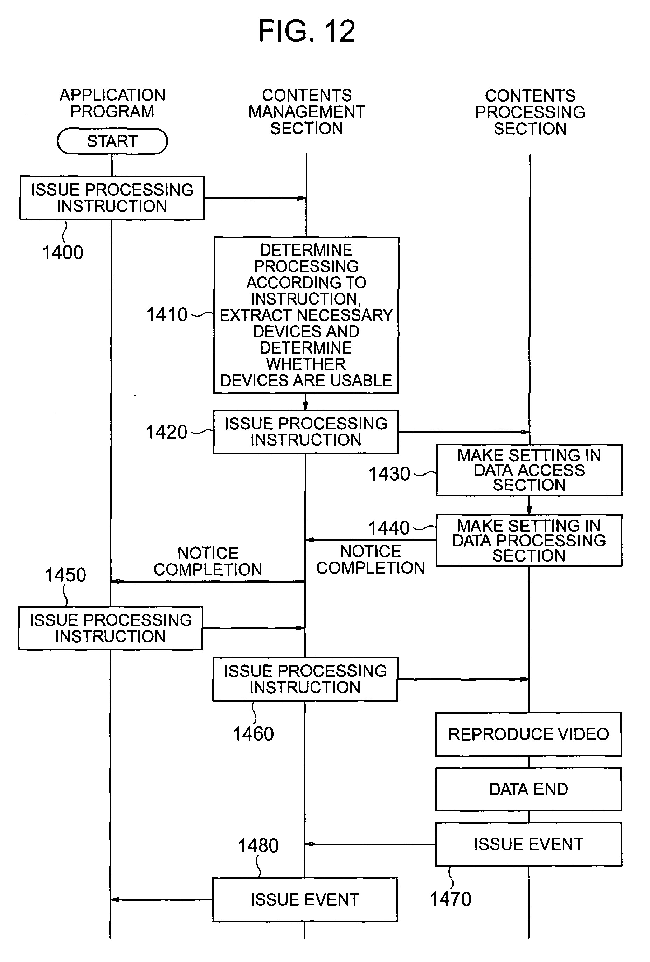

A process from receiving a broadcast from the network adaptor 104 by using software having the architecture shown in Fig. 1 to outputting video data through the display 107 will be described with reference to the flowchart of Fig. 12.

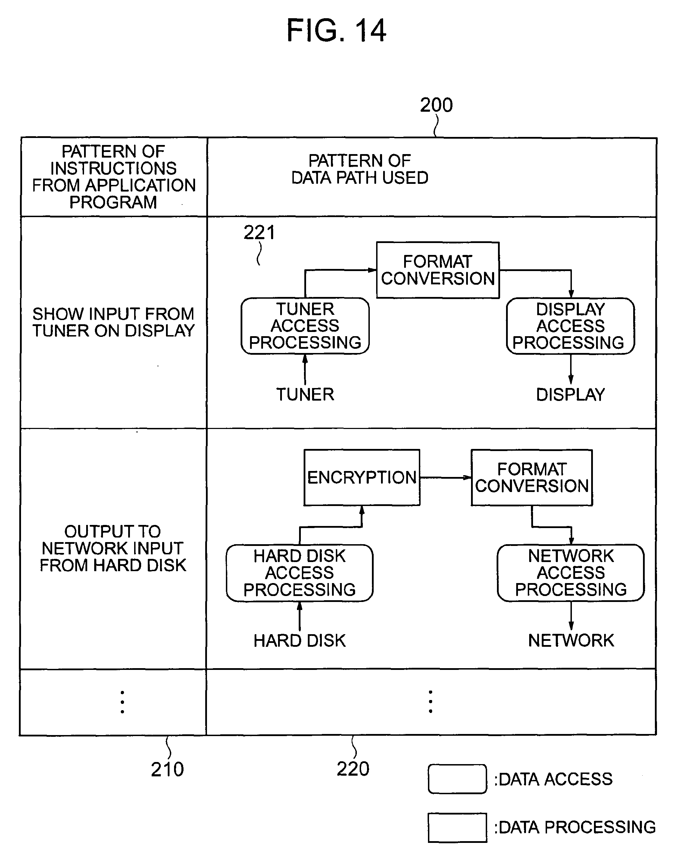

First, the application program 80 issues an instruction to the content management section 30 to "show on the display a broadcast from the network" (step 140). According to this instruction, the content management section 30 determines necessary processing in accordance with the instruction, extracts necessary devices by referring to the resource management table and determines whether or not the devices are available (step 1410). The method of this determination is as described above with reference to Figs. 10 and 11. The method will be described below in detail with reference to Figs. 14, 15 and 16.

The devices extracted in this processing are the network adaptor 104, the CODEC processor 109 and the display 107. If it is determined that these devices are available, the contents management section 30 instructs the contents processing section 10 to input to the CODEC processor 109 input data from the network adaptor 104 and to supply the output from the CODEC processor 109 to the display 107 (step 1420). In the contents processing section 10, the data access section 12 is set so that input and output of data to and from the devices according to the instruction can be performed (step 1430) and the data processing section is set to that the data thereby obtained is suitably processed (step 1440). Details of this processing will be described below with reference to Fig. 13. When, after the completion of this processing, the application program 80 provides a reproduction instruction to the contents management section 30 (step 1450), the contents management section 30 issues a reproduction instruction to the contents processing section 10 (step 1460). Data read out from the network adaptor 104 is thereby read to the contents processing section 10 and then input to the CODEC processor 109 and the output from the CODEC processor 109 is input to the display 107, thereby enabling video reproduction. In this case, video data is not output to the layers above the contents processing section 10. When the reproduction is completed or when an error occurs, an event is sent from the contents processing section 10 to the contents management section 30 (step 1470). This event is delivered from the contents management section 30 to the application program 80 (step 1870). Processing for stop of reproduction, pause, fast forward, rewinding or the like as well as processing for reproduction can be realized by performing processing from step 1450 to 1480.

The procedure for initialization of the data processing section 11 and the data access section 12 in the contents processing section 10 and data conversion processing (steps 1430 and 1440) will be described with reference to Fig. 13. Fig. 13 is a diagram showing details of the contents processing section 10, the system interface section 20 and the driver section 50. In the data access section 12, software modules such as functions for data access processings 121 and 122 for a device A (97) and data access processing 123 for a device B (98) exist. For example, if the device A is the network adaptor, a piece of software for realizing communication using TCP is stored for data access processing A. Needless to say, while the description is made here by assuming that two devices A and B exist, data access processing on a plurality of other devices may also be performed. In data access processing A1 (121) and access processing A2 (122), data exchange with device A (97) is performed through the same device driver A (57). A plurality of data access processings such as data access processing A1 (121) and access processing A2 (122) are performed because a plurality of procedures such as TCP (transmission control protocol) and UDP (user diagram protocol) may exist even in the case of data transfer using the same device and because data access processings corresponding to such difference procedures are required. There is also a possibility of a need for different data access processings will arise at the time of input/output.

Processing in step 1430 shown in Fig. 12 is performed in such a manner that devices necessary for contents processing and necessary data access processings on the devices are determined and relating initialization is performed. For example, in the example shown in Fig. 13, data access processing A1 (121) is assigned as data access processing on device A (97) and data access processing B (123) is assigned as data access processing on device B (98). In this embodiment, since device A is the network adaptor, data access processing A1 is processing by which reception of data transmitted according to TCP by using socket is realized. Also, since device B is the display, data access processing B is processing by which data transfer to the display driver is realized.

In the data processing section 11, program modules such as functions for data processing 1 (111), data processing 2 (112) and data processing 3 (113) exist. These modules perform data conversion processing. As an example of data conversion processing, data format conversion, addition and deletion of headers, compression and decompression of data or encryption is conceivable. In this embodiment, if input data is data MPEG encoded, DES encrypted and input in the form of TCP/IP packets, the headers are deleted by data processing 1, the encrypted data is decrypted by data processing 2 and the data is MPEG decoded by data processing 3. Determination of the concatenated order of the data processing modules, etc., is made by the contents management section. The contents management section determines which data processing modules are used for contents processing to be performed according to an instruction and how the data processing modules are connected, and makes corresponding settings in the contents processing section. Details of this processing will be described below with reference to Figs. 14, 15, and 16.

Each data processing module has an interface for data input/output and can perform data exchange with other data processing modules and data access processing modules. Data to be processed may be input or output through the data access modules. For example, if input data is not encrypted data in this embodiment, processed data after the completion of data processing 2 is output to data access processing B. Thus, this processing corresponds to acquisition of data from a device or output of data to a device. Input/output between the data processing modules is not limited to one-to-one data exchange, and plurality-to-plurality, one-to-plurality and plurality-to-one patterns are conceivable. For example, a one-to-plurality pattern corresponds to a case where reproduction of obtained contents data is performed simultaneously with recording of the data, and a plurality-to-one pattern corresponds to a case where an audio and a video exist as separate contents data and processing for recording the separate groups data as one content in a file. In processing in step 1440, the data processing modules for performing data processing necessary for the desired contents processing are initialized and concatenated.

Fig. 14 shows a table 200 and an example of the construction of the table 200 in which data processing flows in content processing for processing contents according to an instruction from the application program are shown. This table has two columns for a pattern (210) of instructions from the application program and a pattern 200 of data paths to be used. For example, an instruction to "show on the display an input from the tuner" is received from the application program, a pattern of path to be used according to the instruction is obtained. It can be understood therefrom that an input from the tuner may be read by the "tuner access processing" access processing module, converted by the "format conversion" data processing module and output by the "display access processing" access processing module. Thus, the device necessary for contents processing can be extracted by processing in step 1410. Also, in the case of outputting, for example, to the display the input from the tuner, there is a possibility that data in one channel is encrypted data while data in other channels is not encrypted data. With respect to such a case, this pattern is entered in (210) to adapt processing. For example, "Show the input (1 to 4 channels) from the tuner on the display" is provided and the data path pattern corresponding to this instruction pattern is entered in (220).

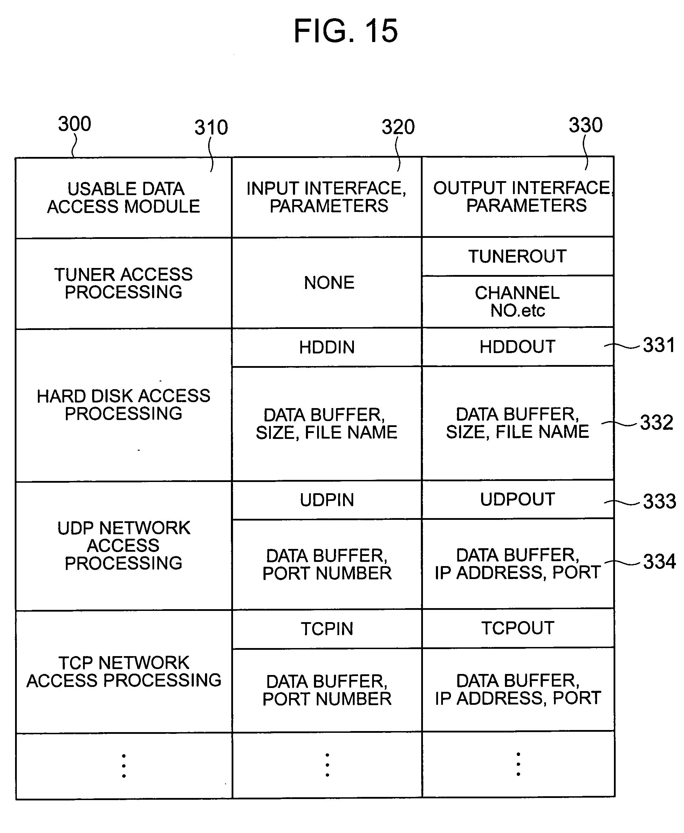

Fig. 15 shows a table 300 of data access modules usable in the contents management section in this implementation, and an example of the construction of the table. This table has identifiers 310 for the usable access modules, input interface parameters 320, and output interface parameters 330. The contents management section determines the data access modules necessary for contents processing according to an instruction by the above-described processing, and thereafter obtains the necessary data access modules by using this table. For example, in the case of performing output to the hard disk access processing module, the module shown in 331 may be called up by using parameters shown in 332. In the case of performing output to the UDP network access processing module, the module shown in 333 may be called up by using parameters shown in 334.

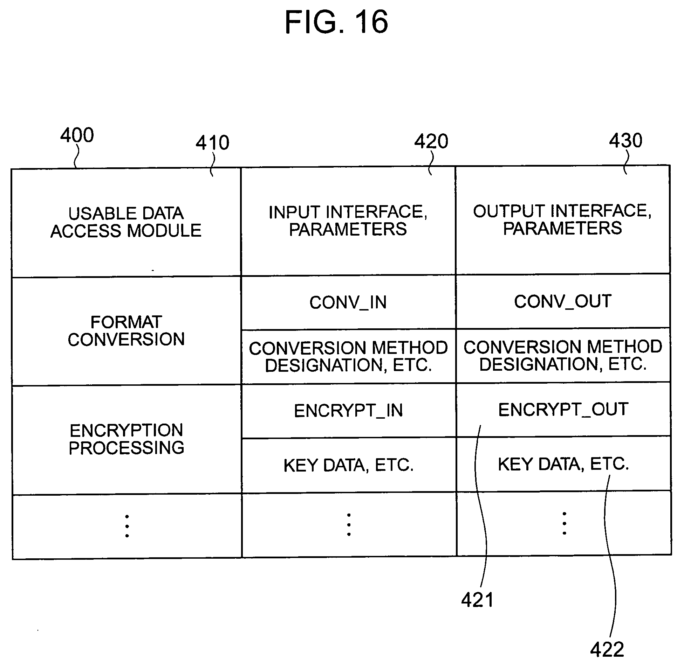

Fig. 16 shows a table 400 of data processing modules usable in the contents management section in this implementation, and an example of the construction of the table. This table has identifiers 410 for the usable data processing modules, input interface parameters 420, and output interface parameters 430. The contents management section determines the data processing modules necessary for contents processing according to an instruction by the above-described processing, and thereafter obtains the necessary data processing modules by using this table. For example, in the case of obtaining the module for performing encryption processing, the module shown in 421 may be called up by using parameters shown in 422. In this case, if there is a plurality of encryption methods, the encryption processing module is provided with respect to each encryption method.

This, in the contents management section, the data access module and data processing modules suitable for contents processing according to an instruction from the application program are selected to set a necessary processing path.

Also, determination as to how contents data should be decoded or encoded is made according to the contents provision method or at the time of recording. For example, with respect to digital broadcasting, the method of encoding contents and the kind of encryption are made public in advance. The instruction pattern 210 shown in Fig. 14 is formed on the basis of information on them to eliminate the need for the application to know the kinds of encryption and encoding. If the stream control section is only given the instruction pattern 210, it can correctly concatenate the necessary data access modules and data processing modules.

Concatenation of modules refers to delivery of processed contents data between modules. For example, in a case where a data access module delivers to a data processing module contents data read out from a device and the data processing modules the delivered data, transmission/reception of the read data between the two modules may suffice. As this method, function designation may be performed by using as a parameter the address of the buffer memory in which the data is recorded or a method may be used in which the modules have an input queue and the data is put in the queue. Use of a shared memory and data exchange using a socket or the like are also conceivable.

A channel through which data flows as described above, i.e., a data path, is set to prepare for contents processing. When data access processing for the data entrance of this data path, i.e., the device to which data is input is started, the data is obtained from the device is delivered to the data processing module to be processed along the data path. Finally, the data is delivered to the exit for the data, i.e., data access processing for outputting the data. The data is thereby output to the device. It is conceivable that device access processing may vary partially depending on the platform. For example, even in ordinary devices, input/output data changes when the platform is changed. In such a case, processing for removing such variation to provide common data may be performed in data access processing. In this manner, the data handled in the platform above the data access section 12 is made completely independent of the platform. For example, such an effect is achieved in a case where data such as a character code differing in used form depending on the platform is converted into a more standard character code such as Unicode in the data access section for example.

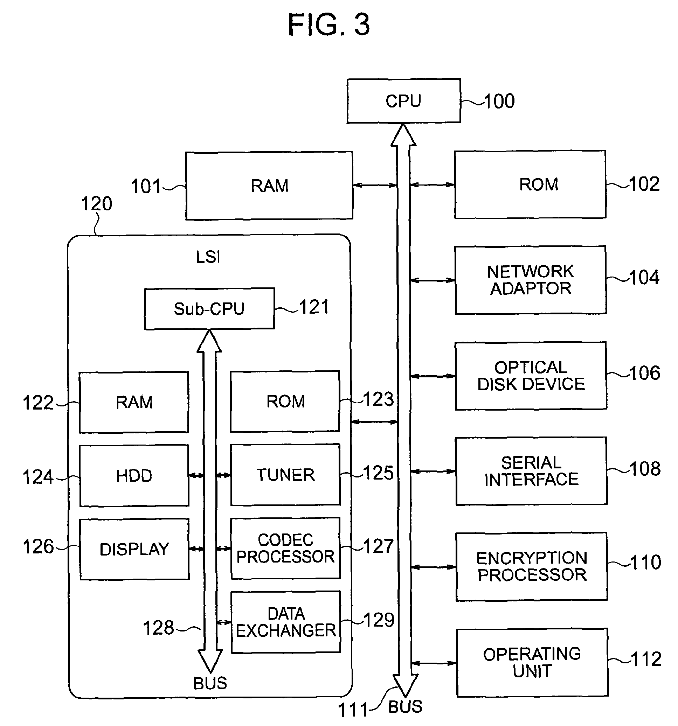

Fig. 3 shows a configuration in a case where an LSI is used for part of the devices shown in Fig. 2. The LSI 120 shown in Fig. 3 is arranged in such a manner that functional means including a HDD 124, a tuner 125, a display 126 and CODEC processor 127 are connected by a bus 128 and a Sub-CPU 121, a RAM 122, a ROM 123 and data exchanger 129 are added. Such an LSI is called SoC (system on chip). This LSI 120 is connected by the bus 111 together with the CPU 100, the RAM 101, the ROM 102, the network adaptor 104, the optical disk device 106, the serial interface 108 and the encryption processor 110 to provide the same functions as those in the case of the hardware configuration shown Fig. 2. While a configuration having an LSI in which devices are mounted has been described with reference to Fig. 3, the device layout is not limited to this example. For example, an arrangement in which that HDD 124 is not provided on the LSI 120 side but HDD 103 exists on the bus 111 of the CPU 1 and an arrangement in which both the two HDDs are mounted are also conceivable.

While in this example the same devices as those provided in the LSI 120 are not provided outside the LSI 120, two or more equivalent devices may be provided. For example, while the tuner is provided in the LSI 120, a tuner is also provided outside the LSI 120. The data exchanger 129 is used for communication between the CPU 100 and the Sub-CPU 121. Various methods for such implementation depending on the configurations of the LSI 120 and the system are conceivable. For example, as a simple method, a method of converting data by using a FIFO (first in first out) type of buffer. Exchange of a large amount of data at a high speed using a shared memory and DMA (direct memory access) transfer is also conceivable. Further, a method of using a register in an LSI and a method of using functions provided by an OS are conceivable. As this means, one or a plurality of means may exist.

Fig. 4 shows an example of a configuration in a case where the contents processing architecture of this embodiment is used a configuration in which an LSI is used as a portion of the system as shown in Fig. 3. In Fig. 4, the CODEC processor 127, the optical disk device 106, the serial interface 108 and the encryption processor 110 component elements, shown in Fig. 3, are not shown. However, these means can be handled in the same configuration. The contents processing architecture of this embodiment operating in the LSI 120 is constituted by a driver section 53, a system interface section 21, a contents processing section 11, a contents management section 31 and an application program 81. The configuration of this architecture is substantially the same as the configuration shown in Fig. 1. The difference therebetween resides in that a driver 59 for data sharing unit 129 for communication with the CPU 100 is added.

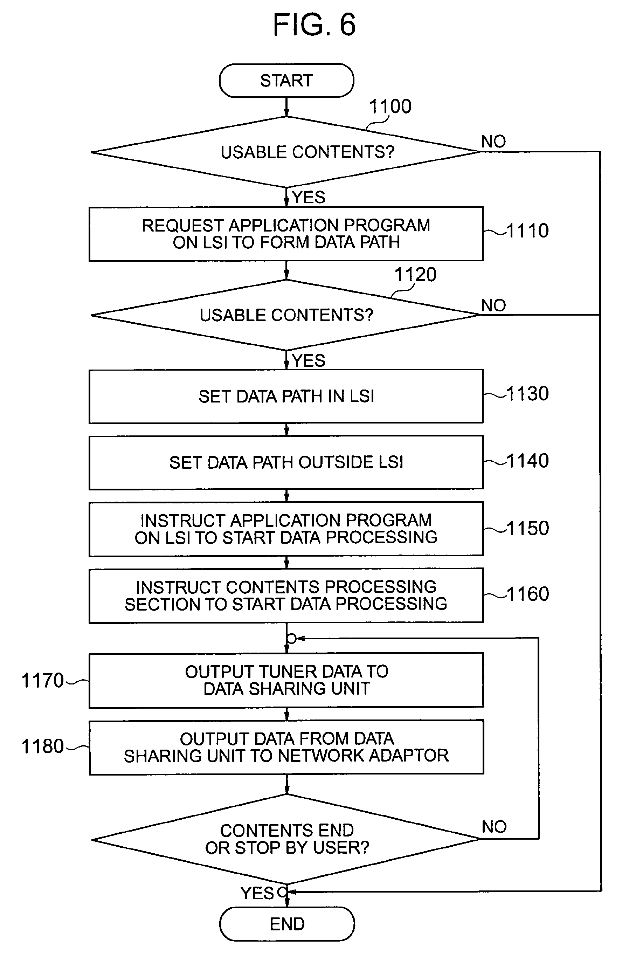

The contents processing architecture for processing using devices outside the LSI 120 is also constituted by a driver section 50, a system function provision section 40, a system interface section 20, a contents processing section 10, a contents management section 30 and an application program 80. The configuration of this architecture is the same as that shown in Fig. 1. From this architecture, the LSI 120 is seen as one device accessed via the LSI driver 51. For example, in a case where data obtained by the tuner 55 of the LSI 55 is sent out by the network adaptor on the main CPU side, data obtained by the tuner 125 is fed through the contents processing section 11 and output to the data sharing unit 129 by using the data sharing drive 59. The data written to the data sharing unit 129 is obtained via the LSI driver 51, and the contents processing section 10 outputs this data to the network adaptor 104. The data input to the contents processing section 11 in the LSI is not output to the higher layers, as described with reference to Fig. 1. For example, the least possible processing such as processing for removing unnecessary data including headers which are significant only for the tuner is performed on the data, and the data is thereafter output to the data sharing unit. Details of this processing will be described below with reference to Fig. 6. From the main CPU side, this data is only seen as data from the device. Therefore, the contents processing section 10 may read out the data, suitably process the read data and output the processed data to the network driver 52.

Fig. 6 shows the flow of contents data processing based on this architecture in the configuration using the LSI shown in Fig. 4. A case where contents data from the tuner 125 is output to the network adaptor 104 will be discussed by way of example. First, the contents management section 30 checks whether or not contents according to an instruction from the application program 80 can be used (step 1100). This step is the same as step 1000. If contents processing can be executed, the contents management section requests, by using the LSI driver 51, the application program 81 on the LSI 120 to form a contents data processing path from the tuner 125 to the data sharing unit 129 (step 1110). Receiving this request, the application program 81 on the LSI 120 checks whether not or not contents processing according go the instruction can be executed (step 1120) and sets a data path between the tuner 125 and the data sharing unit 129 (step 1130). Subsequently, the contents management section 30 sets a data path for outputting data from the data sharing unit 129 of the LSI 120 to the network adaptor 104 for the contents processing section 10 (step 1140).

Thereafter, an instruction is provided to the application program 81 on the LSI 120 to start contents processing, and the application program 81 instructs the contents processing section 11 to start processing (step 1150) and also instructs the contents processing section 10 to start contents processing (step 1160). The data obtained by the tuner 125 is thereby output to the data sharing unit 129 (step 1170). The contents processing section 10 outputs this data to the network adaptor (step 1180). This processing is repeatedly performed until the end of the data is reached or until the user inputs a stop instruction (step 1190). Communication between the application program 81 on the LSI 120 and the LSI driver 51 is performed by using the data sharing unit 129, as in the case of contents of data exchange.

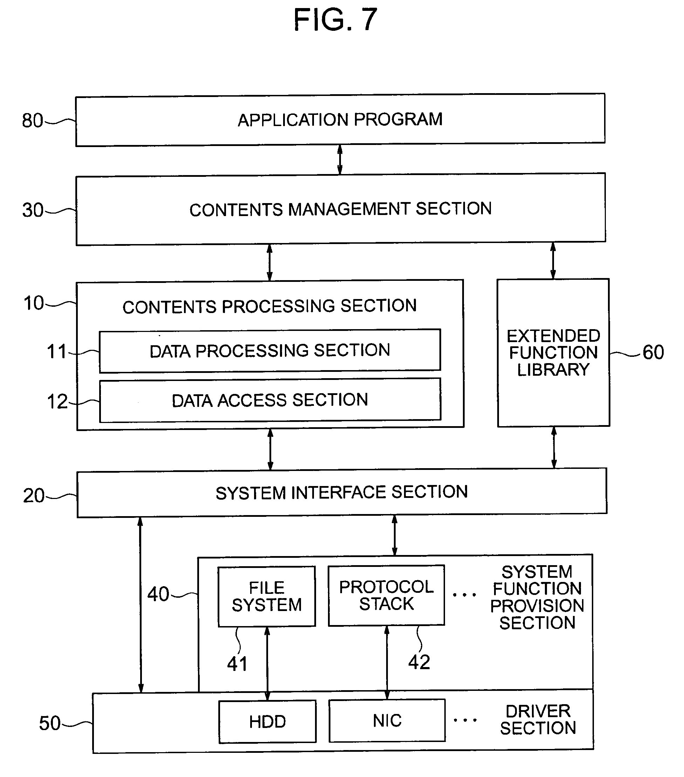

Fig. 7 shows a configuration in a case where an extended function library (60) is added to the architecture of this embodiment. The extended function library (60) is provided for a reason described below. It is conceivable that, for example, with respect to a device requiring a special procedure for its use which is not made public, the source of a program for control of this device is not made public and only a binary library is provided. For example, it is conceivable that in the case of a special storage device in which a key for read must be set to read recorded data, the key and the user processing procedure are concealed in the library without being implemented. In such a case, there is no means for using the device other than use of the library. In such a situation, the library is provided as extended function library (60) to enable use of the device. The extended function library is incorporated in the system in advance or the contents management section dynamically adds the extended function library when necessary. Transfer and control of data processed on the basis of the extended function library are performed by the contents processing section via the system interface. In this case, if the contents processing section is provided with a data access module for the extended function library, the extended function library can be seen as a device from the stream control section and can therefore been used in the arrangement shown in Figs. 14 and 15.

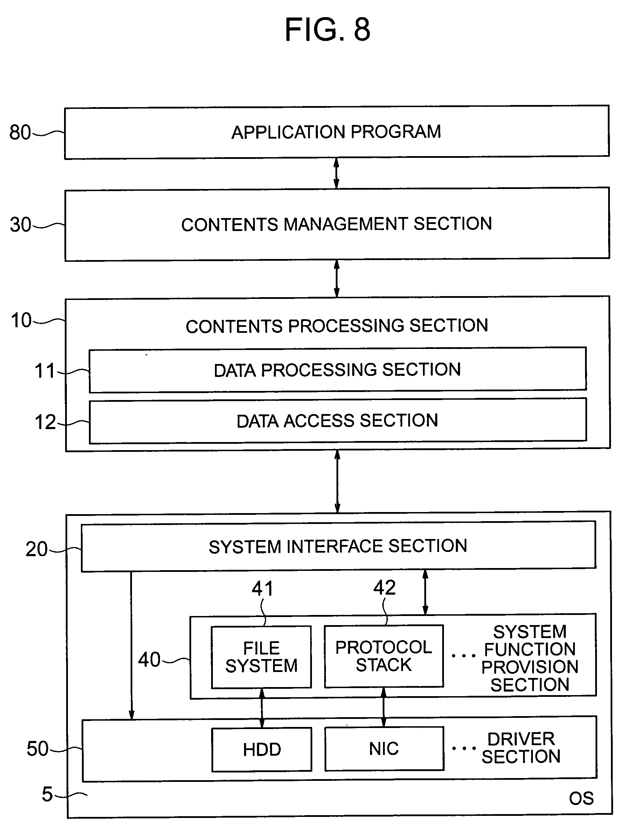

Fig. 8 shows a configuration in which the system interface section 20 in the architecture of this embodiment shown in Fig. 1 is implemented in an OS 5. In this arrangement, the system interface section 20 is implemented as a module in the OS 5. Therefore, if the module in the OS is executed with priority over application programs, this implementation is more advantageous in terms of performance than implementation in user space.

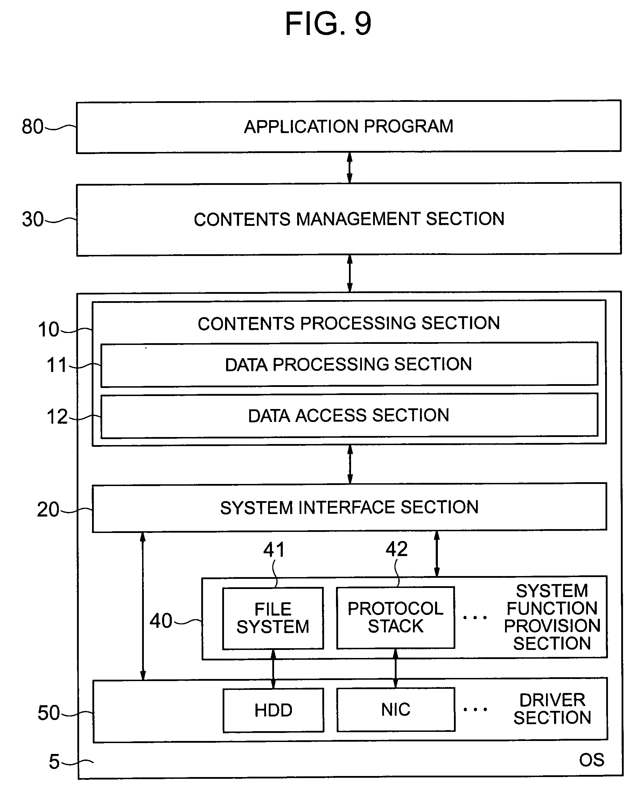

Fig. 9 shows a configuration in which the system interface section 20 and the contents processing section 10 in the architecture of this embodiment shown in Fig. 1 are implemented in an OS 5. In this arrangement, the system interface section 20 and the contents processing section 10 are implemented as modules in the OS 5. Therefore, if the modules in the OS are executed with priority over application programs, this implementation is more advantageous in terms of performance than implementation in user space. It is thought that this implementation is particularly effective in a case where high-bit-rate contents processing which needs to be higher in real-time performance is performed. On the other hand, development for implementation in the OS is difficult and there is a possibility of abnormal shutdown of the OS when a fault occurs during execution. Therefore, determination should be made as to selection from the configurations shown in Figs. 1, 8, and 9 by considering use, the hardware configuration and the number of development steps, etc. For example, in a case where implementation on a platform of low CPU performance or in a case where higher performance is required, a configuration such as shown in Fig. 9, by which high performance can be achieved comparatively easily, may be adopted, although debug, for example, becomes more or less difficult. Conversely, for example, in a case where the speed of the CPU is sufficiently high and execution resources including a memory can be sufficiently utilized or in a case where high performance is not required, a configuration such as shown in Fig. 1, which can be easily implemented, may be adopted.

According to this embodiment, the application program can execute processing independently of the platform. Also, contents processing section and a relating contents processing architecture adaptable to various platforms can be provided. When the contents processing program is transferred to a different platform, the contents processing program can operate without being substantially changed.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A contents processing apparatus comprising:
an input device which inputs contents;
an output device which outputs contents;
a storage section in which processing modules are stored;
an instruction issuing section which issues an instruction;
a contents management section (30) which receives the instruction and makes selection from the processing modules; and
a contents processing section (10) which executes processing by using the selected processing modules,
wherein said contents processing section (10) includes a data access section (12) which performs processing for inputting contents from said input device or processing for outputting contents to said output device, and a data processing section (11) which executes predetermined processing on contents input through said data access section (12) and outputs the processed contents to said data access section (12).

2. The contents processing apparatus according to claim 1,
wherein said contents management section (30) makes selection from said processing modules by referring to a first table in which a combination of the processing modules corresponding to the instruction is prescribed, and a second table in which the selectable processing modules are prescribed.

3. The contents processing apparatus according to claim 2,
wherein the order of the processing modules for executing the instruction is prescribed in the first table.

4. The contents processing apparatus according to claim 1,
wherein a third table in which usable performances of said input and output devices is prescribed is stored in said storage section, and
said contents management section (30) makes a determination as to whether or not performances of the input and output devices necessary for execution of the instruction are within ranges of values prescribed in the third table, and executes the instruction if the necessary performances are within the ranges prescribed in the table.

5. The contents processing apparatus according to claim 1,
wherein at least one processing module is used in said data access section (12) or said data processing section (11).

6. The contents processing apparatus according to claim 1, further comprising:
a storage section storing a first table in which a combination of the processing modules corresponding to the instruction is prescribed, a second table in which the selectable processing modules are prescribed and a third table in which the usable performances of said input and output devices is prescribed,
wherein if said input device is a hard disk drive and if said output device is a network adaptor (104), and a data transfer instruction is transmitted from the HDD to the network adaptor (104), said contents management section (30) makes a determination as to whether or not the performances of the input and output devices necessary for execution of the instruction are within the ranges of values prescribed in the third table, and, if the necessary performances are within the ranges prescribed in the table, selects a hard disk access processing module and a network access processing module as processing modules used in said data access section (12), and at least a format conversion module as a processing module used in said data processing section (11) by referring to the second table, and concatenates the selected modules so that data processed by the hard disk access processing module is input to the format conversion processing module, and so that data processed by the format conversion processing module is input to the network access processing module, and
wherein said contents processing section executes processing in each processing module to execute the instruction.

7. The contents processing apparatus according to claim 6,
wherein on the basis of data transfer source information and data transfer destination information included in the instruction, processing for outputting from the hard disk drive the data designated by the transfer source information is executed in the hard disk access processing module, processing for adding headers to the data is executed in the format conversion processing module, and processing for transmitting the data over a network is executed on the basis of the transfer destination information in the network access processing module.

8. The contents processing apparatus according to claim 6,
wherein if an encoding process is included in the instruction, said contents management section (30) selects and encoding processing module and concatenates the modules so that the data processed by the format conversion processing module is input to the encoding processing module, and
wherein said contents processing section (10) executes processing in each processing module to execute the instruction.

9. A contents processing method for a contents processing device having an instruction issuing section which issues an instruction, an input device which inputs contents, an output device which outputs contents, and a storage section in which processing modules are stored, said method comprising the steps of:
issuing an instruction from the instruction issuing section;
determining whether or not performances of the input and output devices used to execute the instruction are within range of values prescribed in a first table in which a usable performance of the input device or the output device is prescribed;
if it is determined by said determination that the performance is within the range prescribed in the first table, referring to a second table in which a combination of processing modules corresponding to the instruction is prescribed and a third table in which selectable processing modules are prescribed, thereby extracting the corresponding processing modules, and concatenating the selected processing modules; and
executing the instruction by using the concatenated processing modules.

10. A computer program in a computer having an instruction issuing section which issues an instruction, an input device which inputs contents, an output device which outputs contents, and a storage section in which processing modules are stored, said computer program making the computer execute the steps of:
issuing an instruction from the instruction issuing section;
determining whether or not performances of the input and output devices used to execute the instruction are within range of values prescribed in a first table in which a usable performance of the input device or the output device is prescribed;
if it is determined by said determination that the performance is within the range prescribed in the first table, referring to a second table in which a combination of processing modules corresponding to the instruction is prescribed and a third table in which selectable processing modules are prescribed, thereby extracting the corresponding processing modules, and concatenating the selected processing modules; and
executing the instruction by using the concatenated processing modules.
